# EUROPÄISCHE PATENTANMELDUNG

(11) **EP 0 921 475 A1**
(43) Veröffentlichungstag der Anmeldung: **09.06.1999**
(21) Anmeldenummer: 98250410.2
(22) Anmeldetag: 24.11.1998
(51) Int. Cl.: G06F 15/02

(54) **Vorrichtung zur Umrechnung eines Geldbetrags einer ersten Währung in eine zweite Währung**

(30) Priorität: 24.11.1997 DE 19754337
(71) Anmelder: Fimor S.A., 72058 Le Mans, Cedex 2 (FR)
(72) Erfinder: Zuckerman, Alex, 72550 La Quinte (FR)
(74) Vertreter: Christiansen, Henning, Dipl.-Ing.

(57) **Zusammenfassung**

Vorrichtung zur Umrechnung eines Geldbetrags einer ersten Währung in eine zweite Währung mit einer Eingabeeinheit (1), einer damit verbundenen Verarbeitungseinheit (2) zur Durchführung der Umrechnung und Steuerung der Ausgabe mittels einer Ausgabeeinheit (3, 3'), einem mit der Verarbeitungseinheit (2) verbundenen Speicher (4) zum Festhalten mindestens einer Umrechnungskonstanten und mindestens einem Auswahlelement (10, 10') zur Beeinflussung der Umrechnungsrichtung von der ersten Währung in die zweite bzw. umgekehrt, wobei die Verarbeitungseinheit (2) einen der Eingabeeinheit (1) nachgeschalteten Eingangspufferspeicher (6), eine dem Eingangspufferspeicher (6) nachgeschaltete Recheneinheit (7), einen mit der Recheneinheit (7) verbundenen Ausgangsspeicher (8) sowie eine Ausgabesteuerung (9, 9') umfaßt, die sowohl mit dem Eingangspufferspeicher (6) als auch mit dem Ausgangsspeicher (8) verbunden ist, die Ausgabeeinheit (3, 3') einen ersten Ausgabebereich (3.1, 3.1') und einen zweiten Ausgabebereich (3.2, 3.2') zur Anzeige aufweist und die vorgenannten Elemente innerhalb einer Datenverarbeitungsanlage bzw. einem PC (64) hardwaremäßig oder als softwaremäßig emuliert vorgesehen sind, wobei die Datenverarbeitungsanlage bzw. der PC eine mit einer Eingabevorrichtung (65), einem Datenspeicher (66) und einer Ausgabevorrichtung (67) verbundene zentrale Verarbeitungsvorrichtung (68) umfaßt, und die Ausgabevorrichtung (67) die Ausgabeeinheit (3, 3') bildet, der Datenspeicher (66) den Speicher (4), den Eingangspufferspeicher (6) und den Ausgangspufferspeicher (8) umfaßt und wenigstens die Recheneinheit(7), die Ausgabesteuerung (9) und die Auswahlsteuereinrichtung (12) in Form wenigstens eines Datenverarbeitungsprogrammes (72) im Datenspeicher (66) gespeichert sind, auf das die zentrale Verarbeitungsvorrichtung (68) zur Ausführung der Funktionen dieser Elemente zugreift.

## Beschreibung

Die Erfindung betrifft eine Vorrichtung gemäß dem Oberbegriff des Anspruchs 1.

Mit der Einführung einer einheitlichen Währung in Europa stellt sich das Problem eines Hilfsmittels zur Umrechnung von der bisherigen gewohnten Währung in die neue Währung und umgekehrt.

Hierzu wurden bereits einfache Taschenrechner für die Umrechnung von Wechselkursen umgestaltet. Eine derartige gattungsgemäße Vorrichtung ist beispielsweise aus dem deutschen Gebrauchsmuster 297 02 500 bekannt. Es handelt sich hierbei um einen Taschenrechner, bei dem auf Knopfdruck ein Mikroprozessor einen zuvor eingegebenen Währungsbetrag umrechnet und auf dem vorhandenen Display anstelle des Ausgangswertes ausgibt. Der Benutzer muß dabei je nachdem, von welcher Währung aus er umrechnen will, eine der beiden vorgesehenen Umrechnungstasten drücken, um die Umrechnung durch zuführen. Später ist jedoch nicht mehr nachzuvollziehen, welche der beiden Tasten gedrückt wurde, so daß eventuelle Fehler nicht erkannt werden bzw. nicht mehr nachvollziehbar ist, ob der Fehler beispielsweise auf dem irrtümlichen Drücken der falschen Taste oder auf einem falsch eingegebenen Ausgangswert beruht.

Ein anderer derartiger Taschenrechner ist aus der deutschen Offenlegungsschrift 36 16 748 A1 bekannt, der in seiner Funktionsweise dem oben genannten Taschenrechner gleicht. Wie bei dem eben genannten Taschenrechner erfolgt auch hier die Umrechnung nach Betätigen einer Umrechnungstaste. Soll in die andere Richtung umgerechnet werden, so muß vor Betätigen der Umrechnungstaste eine Inversionstaste gedrückt werden. Fehler bei der Eingabe bzw. beim Betätigen der Umrechnungstasten sind auch bei diesem Taschenrechner nicht zu erkennen bzw. später nicht mehr nachzuvollziehen. Weiterhin weist der Taschenrechner eine Vielzahl von Funktionen bzw. Tasten auf, die den mit der Bedienung derartiger Geräte weniger vertrauten Benutzer verwirren können. So erfordert der Taschenrechner beispielsweise die Eingabe (Programmierung) entsprechender Umrechnungsfaktoren und weist zudem Tasten mit Mehrfachfunktionen, die die Bedienung zusätzlich verkomplizieren.

Diese bekannten Taschenrechner weisen noch den weiteren Nachteil auf, daß sie relativ aufwendig in Konstruktion und Herstellung sind.

Es sind auch Emulationen bekannter Taschenrechner in auf PCs zu benutzender Software - beispielsweise dem Programm "Microsoft Windows95" bekannt. Diese Emulationen entsprechen jedoch lediglich einem einfachen Standardmodell eines Taschenrechners und weisen daher die mindestens die Nachteile des zuvor dargestellten Stands der Technik auf.

Der Erfindung liegt deshalb die Aufgabe zugrunde, eine möglichst kostengünstig herzustellende und einfach zu bedienende Vorrichtung zur Umrechnung von Wechselkursen zur Verfügung zu stellen, welche auch in der Umgebung einer Datenverarbeitungsanlage oder eines PC mit entsprechenden Vorteilen benutzbar ist, so daß Bedienfehler vermieden werden, welche sonst durch die komplizierte Bedienung eines PCs mit entsprechendem Programm leicht entstehen könnten..

Die Aufgabe wird, ausgehend von einer Vorrichtung gemäß dem Oberbegriff des Anspruchs 1, durch die im kennzeichnenden Teil des Anspruchs 1 angegebenen Merkmale gelöst.

Die Erfindung schließt dabei insbesondere die Erkenntnis ein, daß eine besonders einfach zu handhabende und übersichtliche Umrechnungsvorrichtung erhalten werden kann, wenn die Anzeigeeinheit zwei Anzeigebereiche umfaßt, bei denen auch nach der Umrechnung noch nebeneinander in einem der Anzeigebereiche der Betrag der Eingabewährung dargestellt wird und in dem anderen Anzeigebereich der umgerechnete Betrag in der Zielwährung dargestellt wird. Eine derartige Anordnung läßt sich in günstiger Weise mittels einer Datenverarbeitungsanlage bzw. einem PC realisieren. Die Bauelemente oder Baugruppen finden sich in Form von Hardwarebaueelementen oder in softwaremäßger Implementierung wieder. Die Bedienung entspricht aber vollkommen der eines Taschenrechners in hardwaremäßger Ausführung.

Dies wird dadurch erreicht, daß jeweils eines der Displays unmittelbar von dem Pufferspeicher für die Eingabe der Ausgangswährung angesteuert wird, während das andere Display über einen Puffer mit dem Ausgang der Rechenschaltung verbunden ist. Um zu erreichen, daß bei der Umrechnung lediglich zwischen zwei Währungen beide Währungen zur Vergrößerung der Übersichtlichkeit ihren festen Platz im Display haben, wird die Zuordnung von Ein- und Ausgabepuffer zu einem der beiden Anzeigefelder je nach Umrechnungsrichtung mit der Auswahl deren Auswahl vertauscht.

Die Speicher- und Rechenelemente werden durch die internen Baugruppen des PC emuliert, während die Form des Taschenrechners auf dem PC wiedergegeben wird. Die Eingabe erfolgt über das Tastenfeld des PC oder mittels Touchscreen direkt in die Abbildung des PC auf dem Bildschirm.

Durch die Klarheit der Darstellung wird zum einen erreicht, daß Fehler bei der Eingabe ohne weiteres nachzuvollziehen sind, da die beiden einander durch die Umrechnung zugeordneten Werte einander unmittelbar gegenüberstehen und Tippfehler bei der Eingabe unmittelbar erkennbar sind.

Sämtliche Umrechnungsfaktoren sind fest für eine oder mehrere Währungen der europäischen Gemeinschaft in Bezug auf den Euro vorgegeben.

Vorteilhafterweise ist dabei weiterhin der jeweiligen Anzeige in den beiden Anzeigebereichen jeweils ein Symbol oder ein oder mehrere Zeichen zugeordnet, das die der jeweiligen Anzeige zugeordnete Währung kennzeichnet. Interpretations-Fehler bzw. Irrtümer bei beim Ablesen des Umrechnungsergebnisses sind dann ausgeschlossen, da einander zwei miteinander korrespondierende Währungsbeträge gegenüberstehen und nicht wie bisher lediglich eine Zahl angezeigt wird, deren Wert aufgrund von Eingabefehlern womöglich nicht dem eigentlich gewünschten Ergebnis entspricht. Selbst Personen, die mit der Bedienung derartiger Vorrichtungen nicht vertraut sind, sind dann derartigen Fehlern nicht ausgeliefert.

Der Aufbau der erfindungsgemäßen Vorrichtung aus besonders einfachen elektronischen Bauelementen ermöglicht eine besonders einfache und wirtschaftliche Herstellung. Hierdurch kann ein sehr geringer Anschaffungspreis realisiert werden, wodurch die Vorrichtung auch in Relation zu der zeitlich begrenzten Gebrauchsdauer erschwinglich ist und sich beispielsweise auch für den Einsatz als Werbegeschenk o.ä. eignet.

Bei einer vorteilhaften Weiterbildung der erfindungsgemäßen Vorrichtung ist die Betätigungseinrichtung zum Starten der Umrechnung von Mitteln zur Erfassung einer Betätigung der Eingabeeinheit gebildet. Mit jeder Tastatureingabe wird somit eine Umrechnung bewirkt, so daß sich die Betätigung einer Betätigungstaste für die Umrechnung erübrigt. Die Bedienung der Vorrichtung wird dadurch erheblich vereinfacht und beschleunigt.

Insbesondere ist bei einer bevorzugten Ausführungsvariante ein rücksetzbarer Summenspeicher vorgesehen, welcher selbsttätig alle eingebenen Umrechnungen einer Umrechnungsrichtung addiert, so daß eine einfache Summierungsfunktion gegeben ist, wobei der Summenspeicher durch das Betätigen einer entsprechenden Taste rücksetzbar ist. Die Anzeige der Summenspeicher-Ergebnisse erfolgt durch Umschalten zwischen Summen- Einzelspeicher mit einer entsprechenden Taste. Auch hier bleiben die Vorteile der Gegenüberstellung von Ausgangs- und Zielwährung erhalten. Hierbei kann die Summierung sogar bei Wechsel der Eingaberichtung fortgesetzt werden. Auf diese Weise können Zielbeträge durch Berücksichtigung beider Währungen ermittelt oder abgeschätzt werden. Bei einer alternativen Ausführungsform kann aber auch mit der Neuauswahl der Umrechnungsrichtung ein Zurücksetzen des Summenspeichers bewirkt werden.

Bei weiteren bevorzugten Ausführungen ist das Umrechnen zwischen mehreren Währungen möglich. Hierzu sind dann im Konstantenspeicher der Vorrichtung die Umrechnungskonstanten für mehrere Währungen abgelegt. Die Recheneinheit der Vorrichtung greift dann auf die jeweiligen Speicherbereiche zu, in denen die entsprechenden Umrechnungskonstanten abgespeichert sind, wobei beispielsweise über einen oder mehrere Wahlschalter bestimmt werden kann, zwischen welchen Währungen umgerechnet werden soll. So kann beispielsweise eine Umrechnung zwischen der europäischen Einheitswährung EURO und mehreren nationalen Währungen vorgesehen sein.

Bei einer vorteilhaften Ausführungsform sind zur Erzielung großer Stückzahlen einheitlicher Grundausführungen sämtliche innerhalb der EU zwischen EURO und Einzelwährungen vorkommenden Umrechnungsfaktoren fest vorgesehen. Eine nationalisierte Ausführung wird dabei durch unumkehrbare Freischaltung der Faktoren für eine einzelne Währung erreicht, während für eine universell zu verwendende Ausführung sämtliche Faktoren zur Auswahl durch ein zusätzliches Auswahlelement freigeschaltet sein können.

Die erfindungsgemäße Vorrichtung ist von einer Datenverarbeitungsanlage gebildet, die eine mit einer Eingabevorrichtung, einem Datenspeicher und einer Ausgabevorrichtung verbundene zentrale Verarbeitungsvorrichtung umfaßt. Die Ausgabevorrichtung bildet dann die Ausgabeeinheit, der Datenspeicher umfaßt den Speicher, den Eingangspufferspeicher und den Ausgangspufferspeicher und wenigstens die Recheneinheit, die Ausgabesteuerung und die Auswahlsteuereinrichtung sind in Form wenigstens eines Datenverarbeitungsprogrammes im Datenspeicher gespeichert, auf das die zentrale Verarbeitungsvorrichtung dann zur Ausführung von deren Funktionen zugreift. Hierdurch werden die Funktionen der Vorrichtung in einfacher Weise in Form eines Datenverarbeitungsprogrammes realisiert, so daß die Vorrichtung auch in Verbindung mit beliebigen derartigen elektronischen Datenverarbeitungsgeräten oder -anlagen, beispielsweise Personalcomputern, elektronischen Taschendatenbanken etc., realisiert bzw. einsetzbar ist, sofern diese nur die Möglichkeit besitzen das Datenverarbeitungsprogramm in ihrem Datenspeicher zu speichern.

Bei günstigen Weiterbildungen der Erfindung ist eine Schnittstelle vorgesehen, über die der Datenspeicher mit einem Daten- oder Funknetz verbindbar ist. Der Datenspeicher ist dann derart ausgebildet, daß die im Datenspeicher gehaltenen Informationen gesteuert von der zentralen Verarbeitungsvorrichtung durch über das Daten- oder Funknetz abrufbare Informationen ersetzbar sind. So ist in einfacher Weise eine ständige Aktualisierung des Inhaltes des Datenspeichers möglich. Bei dem Daten- oder Funknetz handelt es sich dabei um ein beliebiges Rechnernetz, wie insbesondere das Internet. Vorzugsweise sind sind die in dem Bereich des Datenspeichers, der den Speicher bildet, gehaltenen Umrechnungskonstanten (C₁, C₂) ersetzbar. So kann in einfacher Weise über das Daten- oder Funknetz der aktuelle Umrechnungskurs für zwei Devisen, zwischen denen umgerechnet werden soll, importiert werden.

Bei besonders günstigen Varianten der Erfindung ist das Datenverarbeitungsprogramm über das Daten- oder Funknetz abrufbar und nach Art eines Java- oder ActiveX-Applets ausgebildet, so daß es von anderen Benutzern über das Daten- oder Funknetz genutzt werden kann.

Bei weiteren vorteilhaften Ausführungen der Erfindung umfaßt das Datenverarbeitungsprogramm wenigstens ein Unterprogramm, das derart ausgebildet ist, daß es gesteuert von der zentralen Verarbeitungsvorrichtung nach Art eines Filters auf zu Dateien zusammengefaßte Speicherbereiche im Datenspeicher zugreift und die darin gehaltenen Informationen mit dem Format der ersten bzw. zweiten Währung vergleicht. Entspricht der Inhalt von Speicherbereichen der jeweiligen Datei dem Format der ersten bzw. zweiten Währung, überträgt es den Inhalt jeweils in den Eingangspufferspeicher, wobei es die Auswahlsteuereinrichtung entsprechend dem Format des Speicherbereichs schaltet, d. h. die entsprechende Umrechnungsrichtung festlegt. Der Inhalt des Speicherbereichs wird anschließend durch den Inhalt des Ausgangspufferspeichers ersetzt. Hierdurch ist es in einfacher Weise möglich, einer Datei nach darin abgelegten Zahlenwerten, beispielsweise eines bestimmten Währungsformates, zu durchsuchen, diese in eine Zielwährung umzurechnen und dann den Ausgangswert durch den Zahlenwert in der Zielwährung, einschließlich des entsprechenden Zielwährungsformates in der Datei zu ersetzen.

Andere vorteilhafte Weiterbildungen der Erfindung sind in den Unteransprüchen gekennzeichnet bzw. werden nachstehend zusammen mit der Beschreibung der bevorzugter Ausführungen der Erfindung anhand der Figuren näher dargestellt. Es zeigen:
- Figur 1: ein Blockschaltbild einer ersten Ausführung der Erfindung,
- Figur 2: ein Blockschaltbild einer Variante zu der ersten Ausführung der Erfindung,
- Figur 3: ein Blockschaltbild eines Details zu der Ausführung gemäß Fig. 1,
- Figur 4: die erste Ausführung der Erfindung gemäß Figur 1 in perspektivischer Außenansicht,
- Figur 5: ein Blockschaltbild einer anderen Realisierungsform der Erfindung,
- Figur 6: eine Variante der erfindungsgemäßen Vorrichtung gemäß Figur 14,
- Figur 7: ein Blockschaltbild der einer weiteren Variante der Erfindung.

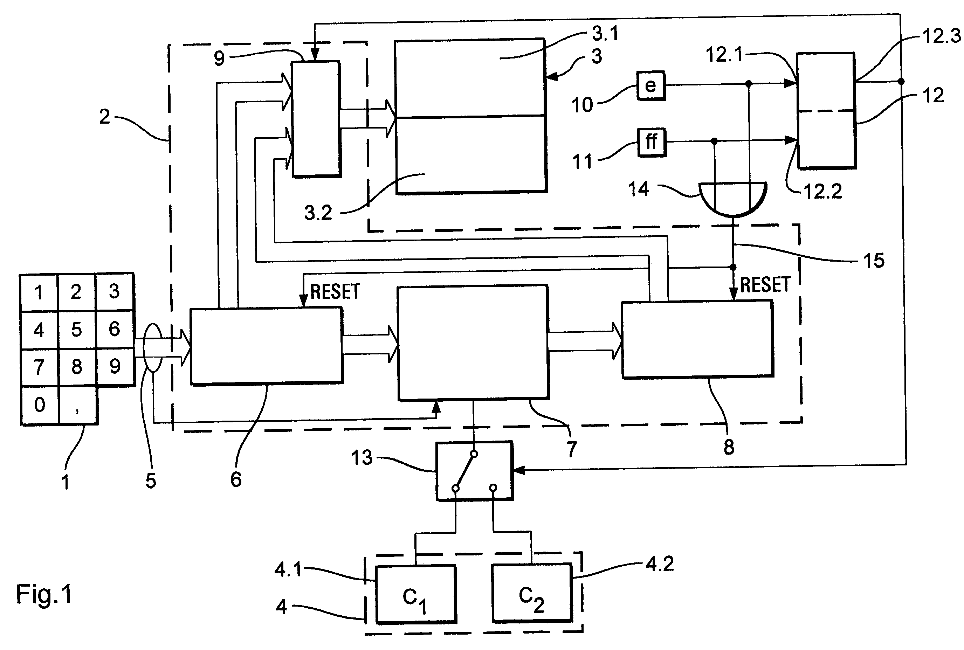

Figur 1 zeigt das Blockschaltbild einer ersten Ausführung der Erfindung mit einer Eingabeeinheit 1, einer Verarbeitungsbaugruppe 2, einer Anzeigeeinheit 3, die einen ersten Anzeigebereich 3.1 und einen zweiten Anzeigebereich 3.2 für Währungsbeträge aufweist, einem Konstantenspeicher 4 für die Umrechnungskonstanten und einem Betätigungselement 5 zum Starten Ausführung der Umrechnung.

Die Eingabeeinheit besteht aus einer Tastatur 1 mit den Ziffern von 0 bis 9, wie sie beispielsweise von Taschenrechnern her bekannt ist. Derartige Tastaturen können in bekannter Weise als Gummitastatur oder im Hinblick auf möglichst geringe Baugröße und wirtschaftliche Herstellbarkeit zweckmäßig als Folientastatur ausgebildet sein. Derartige Tastaturen erzeugen an Ausgängen, welche bevorzugt matrixartig organisiert sind eine Widerstandserniedrigung, welche an entsprechenden Eingängen einer nachgeschalteten Verarbeitungsbaugruppe 2 einen Steuerimpuls hervorruft.

Die Verarbeitungsbaugruppe 2 unfaßt einen Eingangspufferspeicher 6, eine nachgeschaltete Recheneinheit 7, einen mit dem Ausgang der Recheneinheit 7 verbundenen Ausgangsspeicher 8 und eine Ausgabesteuereinheit 9, die sowohl zu dem Eingangspufferspeicher 6 als auch zu dem Ausgangsspeicher 8 eine Verbindung aufweist. Mit dem Eingangspufferspeicher ist ein Schieberegister verbunden, so daß die einzeln eingegebenen Ziffern zunächst in der niedrigstwertigen Stelle erscheinen. Die Eingabe einer nachfolgenden Ziffern verschiebt die bisher eingegebenen Ziffern in die nächst höherwertige Position.

Weiterhin sind zwei Auswahlelemente 10 und 11 vorgesehen, mit der die Eingabewährung festgelegt wird, von der aus der eingegebene Betrag in die Zielwährung umgerechnet werden soll. Während das erste Auswahlelement 10 mit dem Eingang 12.1 einer Auswahlsteuereinrichtung 12 in Form eines Flip-Flops verbunden ist, ist das zweite Auswahlelement 11 mit dem Eingang 12.2 der Auswahlsteuereinrichtung 12 verbunden. Je nachdem, welches der beiden Auswahlelemente 10, 11 zuletzt betätigt wurde, liegt am Ausgang 12.3 der ein vorbestimmter Signalzustand an.

Zusätzlich ist eine Auswahlschaltung 13 vorgesehen, die mit dem Ausgang 12.3 der Auswahlsteuereinrichtung 12 verbunden ist und je nach am Ausgang 12.3 anliegendem Zustand eine Verbindung zwischen der Recheneinheit 7 und dem ersten Speicherbereich 4.1 des Konstantenspeichers 4 oder dem zweiten Speicherbereich 4.2 des Konstantenspeichers 4 herstellt. Während im ersten Speicherbereich 4.1 eine Konstante C₁ zur Umrechnung von einer ersten Währung in eine zweite Währung abgelegt ist, befindet sich im zweiten Speicherbereich 4.2 eine Konstante C₂ zur Umrechnung von der zweiten Währung in die erste Währung. Sämtliche Konstanten sind in der vorliegenden Schaltung in Festwertspeichern vorgegeben und können nicht verändert werden. Es ist lediglich eine Auswahl bei der Herstellung - oder gegebenenfalls auch nachträglich - möglich. Letzteres wird weiter unten beschrieben werden. Im Hinblick auf eine möglichst einfache und rationelle Herstellung entfällt dabei jegliche Programmierbarkeit im Sinne einer nachträglichen Veränderung von Umrechnungskonstanten in RAM-Speichern. Das Gerät ist deshalb auch jederzeit ohne besondere Eingaben von Umrechnungsfaktoren betriebsbereit.

Die Recheneinheit 7 ist bei der dargestelllten Ausführung als einfache Multiplizierschaltung ausgebildet, der den Inhalt des Eingangspufferspeichers 6 mit derjenigen Konstante C₁ bzw. C₂ multipliziert, die in dem Speicherbereich 4.1 bzw. 4.2 gespeichert ist, mit dem die Recheneinheit 7 über die Auswahlschaltung 13 verbunden ist. Das Ergebnis dieser Multiplikation wird dann in den Ausgangsspeicher 8 geschrieben. Das Betätigungselement 5 bestimmt dabei den Zeitpunkt, zu dem eine Multiplikation des Inhalts des Eingangspufferspeichers 6 mit der entsprechenden Konstante C₁ bzw. C₂ erfolgt.

Im gezeigten Ausführungsbeispiel ist das Betätigungselement 5 ein Teil der Tastatur 1. Mit jeder Betätigung der Tastatur 1 wird daher der aktuelle Inhalt des Eingangspufferspeichers 6 mit der entsprechenden Konstante C₁, bzw. C₂ multiplizert und das Ergebnis in den Ausgangsspeicher 8 geschrieben. Eine gesonderte Betätigung einer Eingabetaste, die die gewünschte Umrechnung auslöst, ist damit nicht erforderlich, so daß sich eine besonders einfache Bedienung der Vorrichtung ergibt.

Um eingegebene Zahlen zu löschen und neue Umrechnungen durchführen zu können, sind die Auswahlelemente 10 und 11, verknüpft über eine ODER-Schaltung 14, jeweils mit dem Eingangspufferspeicher 6 und dem Ausgangsspeicher 8 verbunden, so daß bei jeder Betätigung eines der beiden Auswahlelemente 10, 11 der Inhalt der beiden Puffer 6 und 8 auf Null zurückgesetzt wird.

Die Ausgabesteuereinheit 9 stellt den Inhalt des Eingangspufferspeichers 6 und den Inhalt des Ausgangsspeichers 8 auf der Anzeigeeinheit dar, die von einem LCD-Display 3 gebildet ist, das in einen ersten Anzeigebereich 3.1 und einen zweiten Anzeigebereich 3.2 unterteilt ist. Jedem der beiden Anzeigebereiche 3.1, 3.2 ist bei dieser Ausführung eine feste Währung zugeordnet. So ist dem ersten Anzeigebereich 3.1 eine erste Währung, beispielsweise EURO, und dem zweiten Anzeigebereich 3.1 eine zweite Währung, beispielsweise Französische Francs, zugeordnet. Diese Zuordnung kann beispielsweise durch Anbringung eines entsprechenden Währungssymbols über bzw. unter oder neben den Anzeigebereichen 3.1, 3.2 des LCD-Displays 3 erfolgen. Es können zu diesem Zweck aber auch die entsprechend gekennzeichneten ersten und zweiten Auswahlelemente 10 und 11 derart angeordnet sein. Bei dieser Ausführung ist die Eingabe-und Währungszuordnung besonders übersichtlich, da jede Währung im Display ihren festen Platz hat. Die Auswahl der Eingabewährung erfolgt durch Betätigung derjenigen Taste, die mit der Eingabewährung gekennzeichnet ist. Danach kann unmittelbar die Eingabe erfolgen und es wird auch gleich ein Zielwährungsbetrag angezeigt. Für die nächste Eingabe ist lediglich wieder die Auswahltaste zu betätigen. Einfacher kann die Handhabung nicht sein.

Die Ausgabesteuereinheit 9 ist mit dem Ausgang 12.3 der Auswahlsteuerung verbunden und stellt je nachdem, welches der beiden Auswahlelemente 10, 11 zuletzt betätigt wurde, d.h. je nachdem, welcher Zustand am Ausgang 12.3 anliegt, den Inhalt des Eingangspufferspeichers 6 auf dem ersten Anzeigebereich 3.1 und den Inhalt des Ausgangsspeichers 8 auf dem zweiten Anzeigebereich 3.2 dar oder umgekehrt.

Im folgenden wird der Ablauf eines Umrechnungsvorganges mit der in Figur 1 dargestellten Ausführung der Erfindung erläutert. Wurde beispielsweise die erste Währung durch Betätigen des ersten Auswahlelements 10 als Eingabewährung ausgewählt, so werden zunächst über die Verbindungsleitung 15 der Eingangspufferspeicher 6 und der Ausgangsspeicher 8 auf den Ausgangswert Null gesetzt. Gleichzeitig wird der Ausgang 12.3 der Auswahlsteuereinrichtung 12 auf einen dieser Auswahl entsprechenden Zustand gesetzt. Hierdurch wird die Auswahlschaltung 13 geschaltet, so daß die Recheneinheit 7 mit dem ersten Speicherbereich 4.1 verbunden ist, in dem die Konstante C₁ gespeichert ist, mit der ein Wert in der ersten Währung multipliziert werden muß, um einen entsprechenden Wert in der zweiten Währung zu erhalten. Ebenso wird hierdurch die Ausgabesteuereinrichtung 9 so geschaltet, daß sie den Inhalt des Eingangspufferspeichers 6 auf dem ersten Anzeigebereich 3.1 und den Inhalt des Ausgangsspeichers 8 auf dem zweiten Anzeigebereich 3.2 darstellt. Die Zahleneingabe über die Tastatur 1 schreibt die entsprechenden Werte in den Eingangspufferspeicher 6, der als Schieberegister ausgebildet ist, so daß die zuvor eingegebenen Ziffern mit jeder Tastatureingabe um jeweils eine Stelle auf dem ersten Anzeigebereich 3.1 nach links verschoben werden. Die Betätigungseinrichtung 5 bewirkt, daß die Recheneinheit 7 mit jeder Tastatureingabe den Inhalt des Eingangspufferspeichers 6 mit der Konstante C₁ multipliziert und das Ergebnis der Multiplikation in den Ausgangsspeicher 8 schreibt, dessen Inhalt dann von der Ausgabesteuereinheit 9 auf dem zweiten Anzeigebereich 3.2 dargestellt wird. Mit jeder Eingabe durch die Tastatur 1 wird somit ein der bisher eingegebenen Ziffernfolge entsprechender Wert in der ersten Währung auf den ersten Anzeigebereich 3.1 und gleichzeitig dessen Pendant in der zweiten Währung auf dem zweiten Anzeigebereich 3.2 dargestellt.

Soll beispielsweise der Gegenwert von 150 EURO in Französischen Francs ermittelt werden, so müssen die Ziffern 1, 5 und 0 über die Tastatur 1 eingegeben werden. Nach Eingabe der Ziffer 1 erscheint im ersten Anzeigebereich 3.1 die Zahl 1 und im zweiten Anzeigebereich der entsprechende Gegenwert in Französischen Francs, bei einem Umrechnungskurs von 100 EURO entsprechend 675 FF also die Zahl 6,75. Nach Eingabe der Ziffer 5 erscheint im ersten Anzeigebereich 3.1 die Zahl 15 und im zweiten Anzeigebereich die Zahl 101,25. Nach Eingabe der Ziffer 0 erscheint im ersten Anzeigebereich 3.1 die Zahl 150 und im zweiten Anzeigebereich die Zähl 1012,50.

Wird nunmehr das erste Auswahlelement 10 erneut betätigt, so werden der Eingangspufferspeicher 6 und der Ausgangsspeicher 8 wieder auf Null zurückgesetzt, so daß eine neue Zahl eingegeben werden kann. Wird hingegen das zweite Auswahlelement 11 betätigt, so werden zusätzlich zur Rücksetzung der beiden Puffer 6 und 8 auch die Auswahlschaltung 13 und die Ausgabesteuereinheit 9 umgeschaltet. Die Recheneinheit 7 ist dann mit dem zweiten Speicherbereich 4.2 verbunden und die Ausgabesteuereinheit stellt dann den Inhalt des Eingangspufferspeichers 6 auf dem zweiten Anzeigebereich 3.2 und den Inhalt des Ausgangsspeichers 8 auf dem ersten Anzeigebereich 3.1 dar.

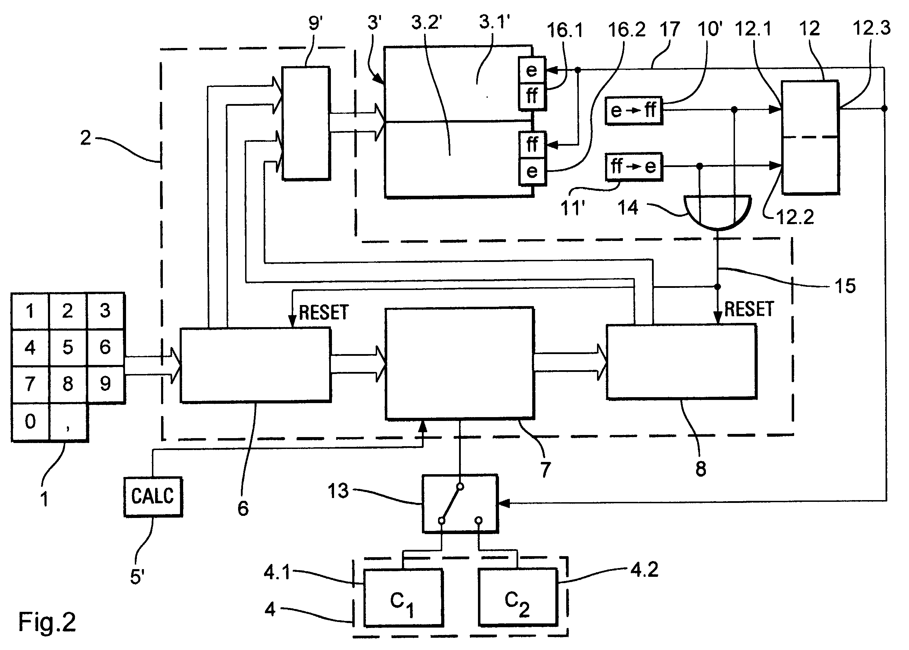

Figur 2 zeigt ein Blockschaltbild einer anderen Ausführungsform der Erfindung. Diese stimmt in den meisten Elementen und deren Funktionsweise mit den aus der Figur 1 bekannten Elementen überein. Übereinstimmende Elemente wurden daher mit denselben Bezugsziffern versehen. Es sollen hier lediglich die Unterschiede zur Ausführung aus Figur 1 erläutert werden, auf eine Beschreibung identischer Elemente und Funktionsweisen wird daher verzichtet.

Bei dieser Ausführung der Erfindung stellt die Ausgabesteuereinheit 9' stets den Inhalt des Eingangspufferspeichers 6 auf dem ersten Anzeigebereich 3.1' dar und den Inhalt des Ausgangsspeichers 8 stets auf dem zweiten Anzeigebereich 3.2'. Zur Kenntlichmachung, um welche Währung es sich bei der im ersten Anzeigebereich 3.1' dargestellten Eingabewährung und der im zweiten Anzeigebereich 3.2' dargestellten Zielwährung handelt, sind auf der Anzeigeeinrichtung 3' im Bereich des ersten Anzeigebereichs 3.1' eine erste Anzeige 16.1 und im Bereich des zweiten Anzeigebereichs 3.2' eine zweite Anzeige 16.2 vorgesehen. Diese Anzeigen 16.1, 16.2 sind über eine Verbindungsleitung 17 mit dem Ausgang 12.3 der Auswahlsteuereinrichung 12 verbunden. Je nachdem, welches der beiden Auswahlelemente 10', 11' zuletzt betätigt wurde, liegt am Ausgang 12.3 der Auswahlsteuereinrichung 12 ein bestimmter Zustand an. In Abhängigkeit vom Zustand am Ausgang 12.3 wird in der Anzeige 16.1 ein der ausgewählten Eingabewährung zugeordnetes Währungszeichen oder Symbol dargestellt und in der Anzeige 16.2 ein der Zielwährung entsprechendes Währungszeichen oder Symbol.

Wurde beispielsweise durch Betätigen des ersten Auswählelements 10' eine Umrechnung von einer ersten Währung in eine zweite Währung, z. B. von EURO in Französische Francs ausgewählt, so erscheint in der ersten Anzeige 16.1 das der ersten Währung zugeordnete Währungszeichen, also ein "e" für EURO, und in der zweiten Anzeige 16.2 das der zweiten Währung zugeordnete Währungszeichen, also ein "FF" für Französische Francs. Wurde jedoch durch Betätigen des zweiten Auswahlelements 11' eine Umrechnung von der zweiten Währung in die erste Währung, also von Französischen Francs in EURO ausgewählt, so erscheint in der ersten Anzeige 16.1 das der zweiten Währung zugeordnete Währungszeichen, also ein "FF" für Französische Francs, und in der zweiten Anzeige 16.2 das der ersten Währung zugeordnete Währungszeichen, also ein "e" für EURO.

Weiterhin ist bei der in Figur 2 gezeigten Ausführung die Betätigungseinrichtung von einer Betätigungstaste 5' gebildet. Wird die Betätigungstaste 5' betätigt, multipliziert die Recheneinheit 7 den Inhalt des Eingangspufferspeichers mit dem Wert der Konstante C₁ bzw. C₂, die in dem Speicherbereich 4.1 bzw. 4.2 gespeichert ist, mit dem die Recheneinheit 7 über die Auswahlschaltung 13 verbunden ist. Das Ergebnis wird dann in den Ausgangsspeicher geschrieben und von der Ausgabesteuereinheit 9' auf dem zweiten Anzeigebereich 3.2' dargestellt. Solange die Betätigungstaste 5' nicht betätigt wird, wird somit auf dem zweiten Anzeigebereich 3.2' das Ergebnis der letzten Multiplikation bzw. vor erstmaligem Betätigen der Betätigungstaste 5' nach Betätigen eines der Auswahlelemente 10', 11' der Wert Null dargestellt.

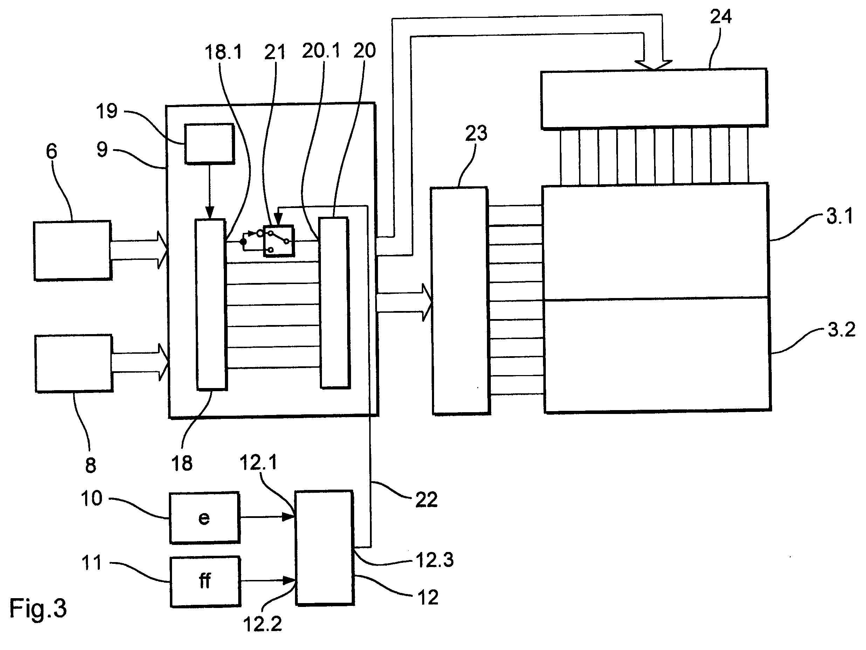

Figur 3 zeigt ein Blockschaltbild einer bevorzugten Ausführungsform der Ausgabesteuereinheit 9 und der Anzeigeeinheit 3 aus Figur 1. Aus Gründen der Übersichtlichkeit sind auch noch die mit der Ausgabesteuereinheit 9 verbundenen Puffer 6 und 8 und die Auswahlelemente 10, 11 sowie die Auswahlsteuereinrichtung 12 dargestellt.

Die Ausgabesteuereinrichtung 9 umfaßt bei dieser bevorzugten Ausführung einen Zähler 18, der mit einem Taktgeber 19 verbunden ist, einen Treiber 20 und einen umschaltbaren Inverter 21, über den ein Ausgang 18.1 des Zählers 18 mit einem Eingang 20.1 des Treibers 20 verbunden ist, und über den am Eingang 20.1 der Zustand am Ausgang 18.1 oder dessen invertierter Wert angelegt sein kann. Der umschaltbare Inverter 21 ist über die Leitung 22 mit dem Ausgang 12.3 der Auswahlsteuereinrichtung 12 verbunden und legt je nach Zustand am Ausgang 12.3 am Eingang 20.1 den Zustand am Ausgang 18.1 oder dessen invertierten Wert an.

Der Treiber wandelt zyklisch wiederkehrend die an seinen Dateneingängen anliegenden Eingangssignale in die an den Horizontaleingängen 23 und Vertikaleingängen 24 des LCD-Displays 3 erforderlichen Signale um und sendet diese an die entsprechenden Eingänge 23, 24 des LCD-Displays 3.

Durch den umschaltbaren Inverter 21 wird beispielsweise das höchstwertige Bit des Treibers umgesetzt, wodurch sich eine Verschiebung in der zeitlichen Abarbeitung der Eingangssignale am Treiber ergibt. Wurde das Auswahlelement 10 betätigt, so ist der umschaltbare Inverter 21 so geschaltet, daß am Eingang 20.1 der Zustand am Ausgang 18.1 des Zählers anliegt. Die zeitliche Abarbeitung der Dateneingänge durch den Treiber 20 erfolgt dann derart, daß zunächst die Dateneingänge abgetastet werden, die mit dem Eingangspufferspeicher 6 verbunden sind, und dann die die Dateneingänge abgetastet werden, die mit dem Ausgangsspeicher 8 verbunden sind. Auf dem LCD-Display 3 wird somit im ersten Anzeigebereich 3.1 der Inhalt des Eingangspufferspeichers 6 und im zweiten Anzeigebereich 3.2 Inhalt des Ausgangsspeichers 8 dargestellt.

Wurde hingegen das Auswahlelement 11 betätigt, so ist der umschaltbare Inverter 21 so geschaltet, daß am Eingang 20.1 der invertierte Zustand am Ausgang 18.1 des Zählers anliegt. Die zeitliche Abarbeitung der Dateneingänge durch den Treiber 20 ist dann derart verschoben, daß vom Treiber 20 zunächst die Dateneingänge abgetastet werden, die mit dem Ausgangsspeicher 8 verbunden sind, und dann die Dateneingänge abgetastet werden, die mit dem Eingangspufferspeicher 6 verbunden sind. Auf dem LCD-Display 3 wird somit im ersten Anzeigebereich 3.1 der Inhalt des Ausgangsspeichers 8 und im zweiten Anzeigebereich 3.2 Inhalt des Eingangspufferspeichers 6 dargestellt.

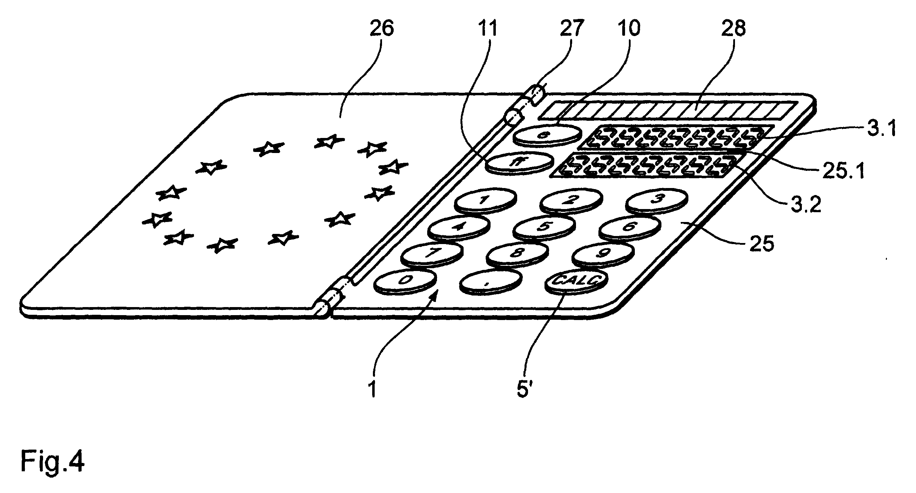

Figur 4 zeigt die perspektivische Ansicht einer Ausführung der erfindungsgemäßen Vorrichtung mit einem Gehäuse 25 und einem über Gelenke 27 schwenkbar daran angeordneten Deckel 26. Die Tastatur 1 sowie die Auswahlelemente 10 und 11 und die Betätigungstaste 5' sind als Gummi- oder Kunststofftastaturen ausgebildet und im Gehäuse 25 eingebettet. Sie sind mit ihren Funktionen entsprechenden Ziffern oder Symbolen gekennzeichnet. Das LCD-Display 3 ist ebenfalls im Gehäuse 25 eingebettet, wobei die beiden Anzeigebereiche 3.1 und 3.2 durch einen Gehäusesteg 25.1 optisch voneinander getrennt sind. Es versteht sich jedoch, daß die beiden Anzeigebereiche 3.1 und 3.2 auch von zwei getrennten Displays gebildet sein können. Die Anzeigebereiche 3.1 und 3.2 des LCD-Displays 3 können dabei mit einer Oberfläche versehen sein, die nach Art einer Lupe die dargestellte Anzeige vergrößert und so das Ablesen von den Anzeigebereichen 3.1 und 3.2 erleichtert.

Zur Spannungsversorgung ist ein ebenfalls im Gehäuse 25 eingebettetes Solarzellenfeld 28 vorgesehen, welches aus einer Serienschaltung photovoltaischer Element besteht. Durch die Versorgung mittels Solarzellen und eine entsprechend niedrige Dimensionierung des Stromverbrauchs der Vorrichtung entsteht auch bei einer späteren Entsorgung keine Umweltbelastung durch schädliche Batteriebestandteile.

Im zusammengeklappten Zustand weist die Vorrichtung etwa die Größe einer herkömmlichen Scheckkarte auf. Es versteht sich aber, daß die Vorrichtung problemlos auch bedeutend kleiner ausgebildet sein kann, wodurch jedoch unter Umständen die Bedienung etwas erschwert wird, da sich Größe und Abstand der Tasten reduzieren.

Der Deckel sowie die Außenflächen des Gehäuses stehen als Informationsträger zur Verfügung. So können beispielsweise Bedienungshinweise oder auch Werbebotschaften o.ä. auf diesen Gehäusehalbschalen aufgebracht, z.B. aufgedruckt sein.

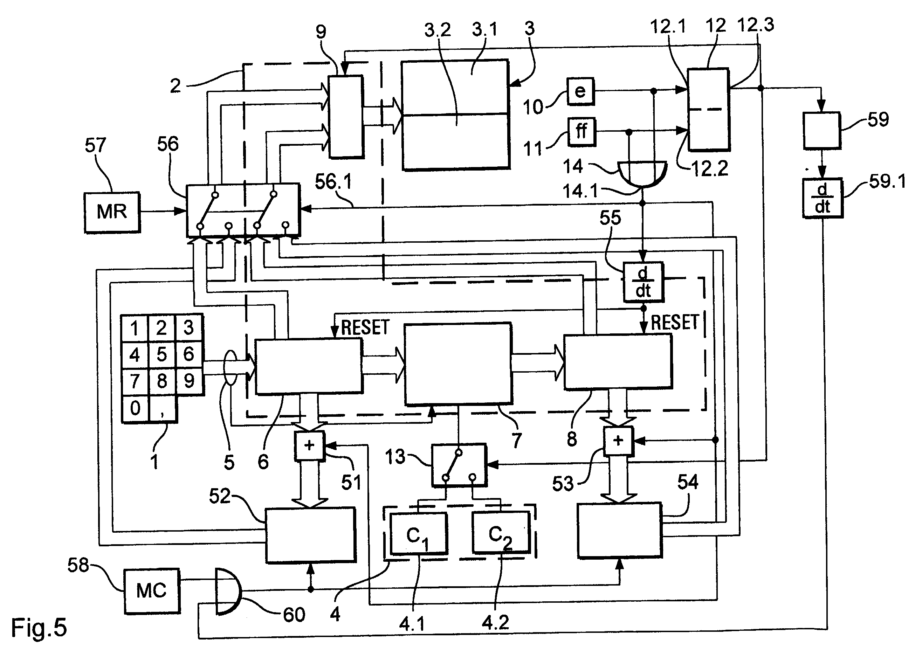

Figur 5 zeigt das Blockschaltbild einer weiteren bevorzugten Ausführung der Erfindung mit einer Additionsfunktion, die es ermöglicht, mehrere Zahlen einzugeben und deren Summe sowie deren Umrechnungswert auf dem Ausgabgedisplay anzeigen zu lassen. Der prinzipielle Aufbau dieser Ausführung entspricht demjenigen aus Figur 1, so daß hier lediglich die Abweichungen von der Ausführung gemäß Figur 1 beschrieben werden.

Der Eingangspufferspeicher 6 ist über einen ersten Addierer 51 mit dem Eingangssummenspeicher 52 verbunden und der Ausgangsspeicher 8 ist über einen zweiten Addierer 53 mit dem Ausgangssummenspeicher 54 verbunden. Die Addierer 51 und 53 addieren den Inhalt des jeweiligen Puffers 6, 8 zum Inhalt des jeweiligen Summenspeichers 52, 54. Die Addition wird durch Betätigung eines der beiden Auswahlelemente 10, 11 ausgelöst. Hierzu sind die beiden Addierer mit dem Ausgang 14.1 der ODER-Schaltung 14 verbunden. Um sicherzustellen, daß das ebenfalls durch eine Betätigung eines der beiden Auswahlelemente 10, 11 ausgelöste Rücksetzen der beiden Puffer 6, 8 erst erfolgt, wenn die Addition abgeschlossen ist, sind die beiden Puffer 6, 8 über ein D-Glied 55 mit dem Ausgang 14.1 der ODER-Schaltung 14 verbunden, das das Rücksetzen der beiden Puffer 6, 8 gegenüber der von den beiden Addierern 51 und 53 durchzuführenden Addition verzögert.

Weiterhin ist ein Schalter 56 vorgesehen, der entweder den Eingangspufferspeicher 6 und den Ausgangsspeicher 8 oder den Eingangssummenspeicher 52 und den Ausgangssummenspeicher 54 mit der Ausgabesteuereinheit 9 verbindet. Der Schalter 56 ist über die Leitung 56.1 mit dem Ausgang 14.1 der ODER-Schaltung 14 verbunden und so ausgebildet, daß er bei Betätigung eines der beiden Auswahlelemente 10, 11 den Eingangspufferspeicher 6 und den Ausgangsspeicher 8 mit der Ausgabesteuereinheit 9 verbindet. Der Schalter ist weiterhin mit einer Abruftaste 57 verbunden und weiterhin so ausgebildet, daß er bei Betätigung der Abruftaste 57 den Eingangssummenspeicher 52 und den Ausgangssummenspeicher 54 mit der Ausgabesteuereinheit 9 verbindet. Je nachdem, ob einer der beiden Auswahlelemente 10, 11 oder die Abruftaste 57 zuletzt betätigt wurde, werden auf dem Ausgabedisplay 3 somit die Inhalte der beiden Puffer 6, 8, also die zuletzt über die Tastatur 1 eingegebene Zahl und deren Umrechnungswert, oder die Inhalte der beiden Summenspeicher 52, 54 dargestellt, also die zuletzt Summe der über die Tastatur 1 eingegebenen Zahlen und deren Umrechnungswert. Es versteht sich jedoch, daß beispielsweise auf die Verbindungsleitung 56.1 verzichtet werden kann, wobei der Schalter dann so ausgebildet ist, daß er durch Betätigung der Abruftaste 57 wechselweise den Eingangspufferspeicher 6 und den Ausgangsspeicher 8 oder den Eingangssummenspeicher 52 und den Ausgangssummenspeicher 54 mit der Ausgabesteuereinheit 9 verbindet.

Die Rücksetzung des Eingangssummenspeichers 52 und des Ausgangssummenspeichers 54 auf Null erfolgt entweder durch Betätigung einer Rücksetztaste 58 oder durch eine Einrichtung 59 zur Erfassung einer Zustandsänderung am Ausgang 12.3 der Auswahlsteuereinrichtung 12, die über eine ODER-Schaltung 60 verknüpft mit dem Eingangssummenspeicher 52 und dem Ausgangssummenspeicher 54 verbunden sind. Die Einrichtung 59 ist dabei so ausgebildet, daß sie bei einer Zustandsänderung am Ausgang 12.3 der Auswahlsteuereinrichtung 12, einen Rücksetzimpuls an den Eingangssummenspelcher 52 und den Ausgangssummenspeicher 54 sendet. Eine solche Zustandsänderung am Ausgang 12.3 der Auswahlsteuereinrichtung 12 ergibt sich, wie oben ausführlich beschrieben, wenn eines der beiden Auswahlelemente 10, 11 zu Umschalten der Umrechnungsrichtung betätigt wird, d. h. wenn eines der beiden Auswahlelemente 10, 11 betätigt wird, nachdem zuvor das andere der beiden Auswahlelemente 10, 11 betätigt wurde. Der Einrichtung 59 ist ein Verzögerungselement 59.1 nachgeschaltet, so daß der Rücksetzimpuls den Eingangssummenspeicher 52 und den Ausgangssummenspeicher 54 zeitverzögert erreicht, um sicherzustellen, daß die Rücksetzung des Eingangssummenspeichers 52 und des Ausgangssummenspeichers 54 erst nach der ebenfalls durch eine Betätigung eines der beiden Auswahlelemente 10, 11 ausgelösten Addition durch die Addierer 51 und 53 erfolgt. Es versteht sich, daß das Rücksetzen durch nicht unbedingt erforderlich ist. Es würde genügen, lediglich eine Rücksetztaste 58 vorzusehen. Die Einrichtung 59 erübrigt aber beim Wechsel der Umrechnungsrichtung die notwendige Betätigung der Rücksetztaste 58 und vereinfacht somit die Bedienung der Vorrichtung.

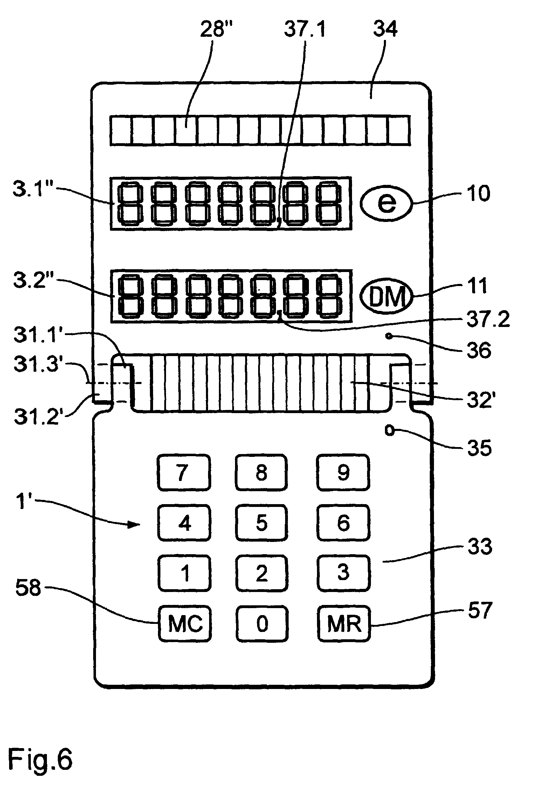

Figur 6 zeigt eine Ausführung einer Vorrichtung gemäß Figur 5. Die Tastatur 1', die Abruftaste 57 und die Rücksetztaste 58 sind in einer unteren Gehäusehalbschale 33 angeordnet, die mit einer oberen Gehäusehalbschale 34 über an der unteren Gehäusehalbschale 33 angeformte Gelenkelemente 31.1' und damit zusammenwirkende, an der oberen Gehäusehalbschale 34 angeformte Gelenkelemente 31.2' um eine Achse 31.3' schwenkbar verbunden ist.

Im Gehäuseoberteil 34 sind die Anzeigebereiche 3.1'' und 3.2'', die Auswahlelemente 10 und 11 sowie das Solarzellenfeld 28'' angeordnet. Am Gehäuseunterteil 33 ist ein Schalter 35 angeordnet, auf den im zusammengeklappten Zustand der Vorrichtung ein am Gehäuseoberteil 34 angeformter Stift 36 derart einwirkt, daß die Vorrichtung abgeschaltet wird. Wird die Vorrichtung aufgeklappt, so löst sich der Stift 36 vom Schalter 35 und die Vorrichtung wird eingeschaltet.

Die in den beiden Gehäuseteilen 33 und 34 angeordneten Elemente der Vorrichtung sind über ein flexibles Leiterband 32' miteinander verbunden.

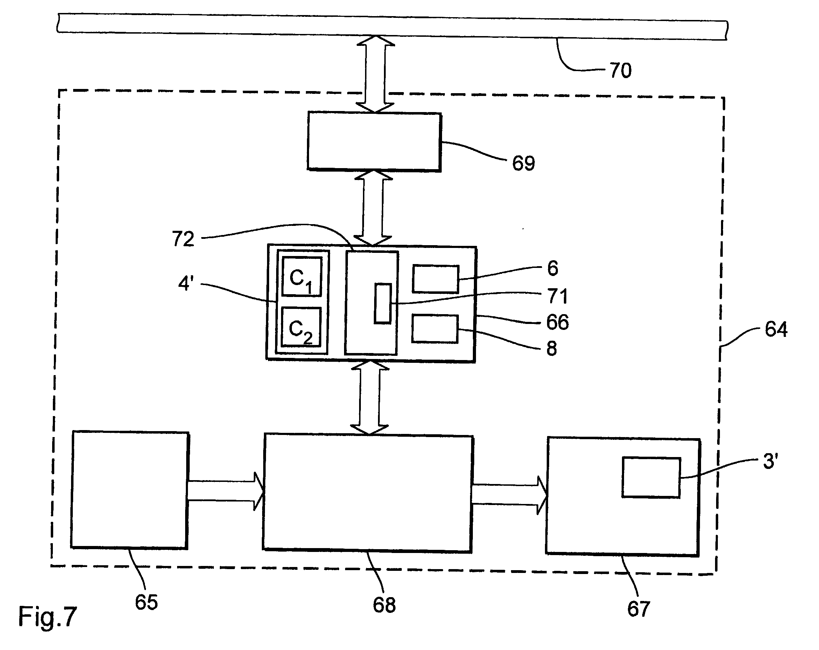

Figur 7 zeigt die Realisierung der vorstehenden Ausführungen der Erfindung in hard- oder softwaremaßig in Form einer Datenverarbeitungsanlage oder als Software realisierter Form, die in ihren Elementen und Funktionen einem der oben beschriebenen Ausführungsbeispiele entspricht, so daß hier lediglich auf die besondere Ausgestaltung der einzelnen Elemente und Unterschiede zu den beschriebenen Ausführungsbeispielen eingegangen werden soll.

Die erfindungsgemäße Vorrichtung ist von einer Datenverarbeitungsanlage 64 gebildet, die eine mit einer Eingabevorrichtung 65, einem Datenspeicher 66 und einer Ausgabevorrichtung 67 verbundene zentrale Verarbeitungsvorrichtung 68 umfaßt. Die Ausgabevorrichtung 67 bildet dabei die Ausgabeeinheit 3'' der Vorrichtung. Der Datenspeicher 66 umfaßt den Speicher 4', den Eingangspufferspeicher 6 und den Ausgangsspeicher 8. Die Recheneinheit 7, die Ausgabesteuerung 9 und die Auswahlsteuereinrichtung 12 sind in Form wenigstens eines Datenverarbeitungsprogrammes 72 im Datenspeicher 66 gespeichert. Zur Ausführung der oben zu den übrigen Ausführungsbeispielen beschriebenen Funktionen der Recheneinheit 7, der Ausgabesteuerung 9 und der Auswahlsteuereinrichtung 12 greift die zentrale Verarbeitungsvorrichtung 68 dann auf das Datenverarbeitungsprogramm 72 zu.

Die Eingabevorrichtung 65 umfaßt dabei eine entsprechende Tastatur, die die Eingabeeinheit 1, das Auswahlelement 10, 11 und die Auslöseeinheit 5 im Sinne der oben beschriebenen Ausführungsbeispiele bildet. Es versteht sich jedoch, daß Teile oder auch die gesamte Eingabeeinheit 1, das Auswählelement 10, 11 und die Auslöseeinheit 5 im Sinne der oben beschriebenen Ausführungsbeispiele als entsprechende Bedienfelder ausgeführt sein können, die durch entsprechende im Datenspeicher 66 gespeicherte Programme auf der Ausgabevorrichtung 67 dargestellt sein können. Die Betätigung der Eingabeeinheit 1 und/oder des Auswahlelements 10, 11 und/oder der Auslöseeinheit 5 erfolgt dann in bekannter Weise mit einer Maus o. ä. oder, falls die Ausgabevorrichtung 67 ein berührungsempfindlicher Bildschirm ist, mit den Fingern oder einem entsprechenden Eingabestift.

Die Funktionen der Vorrichtung werden hierdurch softwaremäßig, d. h. in Form eines Datenverarbeitungsprogrammes realisiert, so daß die Vorrichtung auch in Verbindung mit beliebigen elektronischen Datenverarbeitungsgeräten 64, beispielsweise Personalcomputern, elektronischen Taschendatenbanken etc., einsetzbar ist, sofern diese nur die Möglichkeit besitzen das Datenverarbeitungsprogramm 72 in ihrem Datenspeicher 66 zu speichern.

Die Datenverarbeitungsanlage 64 weist eine Schnittstelle 69 auf, über die der Datenspeicher 66 mit einem Daten- oder Funknetz 70 verbunden ist. Die im Datenspeicher 66 gehaltenen Informationen können gesteuert von der zentralen Verarbeitungsvorrichtung 68 durch über das Daten- oder Funknetz 70 abrufbare Informationen ersetzt werden. So ist in einfacher Weise eine ständige Aktualisierung des Inhaltes des Datenspeichers 66 möglich. Bei dem Daten- oder Funknetz 70 handelt es sich dabei um ein beliebiges Rechnernetz, wie insbesondere das Internet. Zu den ersetzbaren Informationen gehören dabei die sind die in dem Bereich des Datenspeichers 66, der den Speicher 4' bildet, gehaltenen Umrechnungskonstanten (C₁, C₂). So kann in einfacher Weise über das Daten- oder Funknetz 70 der aktuelle Umrechnungskurs zwischen zwei Devisen, zwischen denen umgerechnet werden soll, importiert werden.

Das Datenverarbeitungsprogramm 2' ist über das Daten- oder Funknetz 70 abrufbar, wobei es als Java-Applet programmiert ist, so daß es von anderen Benutzern mittels einer an das Daten- oder Funknetz 70 angeschlossenen Datenverarbeitungseinrichtung unabhängig von deren Betriebssystem genutzt werden kann.

Das Datenverarbeitungsprogramm 2' weist ein Unterprogramm 71 auf, das gesteuert von der zentralen Verarbeitungsvorrichtung 68 nach Art eines Filters auf zu Dateien zusammengefaßte Speicherbereiche im Datenspeicher 66 zugreift und die darin gehaltenen Informationen mit dem Format der ersten bzw. zweiten Währung vergleicht, zwischen denen umgerechnet werden soll. Entspricht der Inhalt eines Speicherbereichs der jeweiligen Datei dem Format der ersten bzw. zweiten Währung, so überträgt das Unterprogramm 71 den Inhalt des Speicherbereichs in den Eingangspufferspeicher 6, wobei es die Auswahlsteuereinrichtung 12 entsprechend dem Format des Speicherbereichs schaltet, d. h. die entsprechende Umrechnungsrichtung festlegt. Der Inhalt des Speicherbereichs wird dann durch den Inhalt des Ausgangspufferspeichers 8 ersetzt. Mit diesem Unterprogramm 71 ist es möglich, eine Datei nach darin abgelegten Zahlenwerten, beispielsweise eines bestimmten Währungsformates abzusuchen, diese in eine Zielwährung umzurechnen und dann den Ausgangswert durch den Zahlenwert in der Zielwährung, einschließlich des entsprechenden Zielwährungsformates in der Datei zu ersetzen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Insbesondere sind die dargestellten Arbeitsprinzipien nicht auf eine Realisierung in fest verdrahteter Logik beschränkt. Eine Implementierung kann auch jederzeit in einer rein softwaremäßig gesteuerten Ausführung erfolgen, bei der dann die zu erzeugenden Verknüpfungen logisch nacheinander durchgeführt werden. Wenn dies auch ein Rechenprogramm voraussetzt, so ist damit nicht eine Programmierung durch den Anwender gemeint, welche in der Eingabe von Rechenschritten oder von Umrechnungsfaktoren besteht. Die Erfindung verbessert insoweit auch die entsprechenden Verfahren zur Umrechnung und kann auch in größeren Geräten enthalten sein, um diesen zusätzlich die Möglichkeit einer vereinfachten Umrechnung zwischen Währungen zu geben.

## Patentansprüche

1. Vorrichtung zur Umrechnung eines Geldbetrags einer ersten Währung in eine zweite Währung bzw. umgekehrt mit einer Eingabeeinheit (1), einer damit verbundenen Verarbeitungseinheit (2) zur Durchführung der Umrechnung und Steuerung der Ausgabe mittels einer Ausgabeeinheit (3, 3'), einem mit der Verarbeitungseinheit (2) verbundenen Speicher (4) zum Festhalten mindestens einer Umrechnungskonstanten und mindestens einem Auswahlelement (10, 10') zur Beeinflussung der Umrechnungsrichtung von der ersten Währung in die zweite bzw. umgekehrt, wobei
die Verarbeitungseinheit (2) einen der Eingabeeinheit (1) nachgeschalteten Eingangspufferspeicher (6), eine dem Eingangspufferspeicher (6) nachgeschaltete Recheneinheit (7), einen mit der Recheneinheit (7) verbundenen Ausgangsspeicher (8) sowie eine Ausgabesteuerung (9, 9') umfaßt, die sowohl mit dem Eingangspufferspeicher (6) als auch mit dem Ausgangsspeicher (8) verbunden ist,
die Ausgabeeinheit (3, 3') einen ersten Ausgabebereich (3.1, 3.1') und einen zweiten Ausgabebereich (3.2, 3.2') zur Anzeige aufweist,
das Auswahlelement (10, 10', 11, 11') mit dem Eingang (12.1, 12.2) einer Auswahlsteuereinrichtung (12) verbunden ist,
die Recheneinheit (7) gesteuert von der Auslöseeinheit (5) über eine mit dem Ausgang (12.3) der Auswahlsteuereinrichtung (12) verbundene, in Abhängigkeit vom Zustand am Ausgang (12.3) der Auswahlsteuereinrichtung (12) geschaltete Umschaltvorrichtung (13) auf eine in dem Speicher (4) vorhandene erste Umrechnungskonstante (C₁) oder zweite Umrechnungskonstante (C₂) zugreift,
die zweite Umrechnungskonstante den Kehrwert der ersten bildet, den Inhalt des Eingangspufferspeichers (6) mit dieser Umrechnungskonstanten (C₁, C₂) multipliziert und den Ergebniswert im Ausgangsspeicher (8) ablegt,
die Ausgabesteuerung (9) mit dem Ausgang (12.3) der Auswahlsteuereinrichtung (12) verbunden ist sowie in Abhängigkeit von dessen Zustand den Inhalt des Eingangspufferspeichers (6) in den ersten Ausgabebereich (3.1) und den Inhalt des Ausgangsspeichers (8) in den zweiten Ausgabebereich (3.2) überführt bzw. umgekehrt,
der erste Ausgabebereich (3.1) mit einer Kennzeichnung für die ersten Währung und der zweite Ausgabebereich (3.2) mit einer Kennzeichnung für die zweite Währung versehen ist,
oder
die Ausgabesteuerung (9') den Inhalt des Eingangspufferspeichers (6) in den ersten Ausgabebereich (3.1') und den Inhalt des Ausgangsspeichers (8) in den zweiten Ausgabebereich (3.2') überführt, der Eingang der Ausgabesteuerung (9') mit dem Ausgang (12.3) der Auswahlsteuereinrichtung (12) verbunden ist so daß durch entsprechende Ansteuerung in Abhängigkeit von dessen Zustand eine Kennzeichnung für die Eingabewährung in einem ersten Anzeigefeld (16.1) des ersten Ausgabebereichs (3.1') und eine Kennzeichnung für die Zielwährung in einem zweiten Anzeigefeld (16.2) im zweiten Ausgabebereich (3.2') wiedergegeben wird, und
wobei die vorgenannten Elemente innerhalb einer Datenverarbeitungsanlage bzw. einem PC (64) hardwaremäßig oder als softwaremäßig emuliert vorgesehen sind, und die Datenverarbeitungsanlage bzw. der PC eine mit einer Eingabevorrichtung (65), einem Datenspeicher (66) und einer Ausgabevorrichtung (67) verbundene zentrale Verarbeitungsvorrichtung (68) umfaßt, und die Ausgabevorrichtung (67) die Ausgabeeinheit (3, 3') bildet, der Datenspeicher (66) den Speicher (4), den Eingangspufferspeicher (6) und den Ausgangspufferspeicher (8) umfaßt und wenigstens die Recheneinheit(7), die Ausgabesteuerung (9) und die Auswahlsteuereinrichtung (12) in Form wenigstens eines Datenverarbeitungsprogrammes (72) im Datenspeicher (66) gespeichert sind, auf das die zentrale Verarbeitungsvorrichtung (68) zur Ausführung der Funktionen dieser Elemente zugreift.

2. Vorrichtung nach Anspruch 1, **dadurch gekennzeichnet,** daß eine Schnittstelle (69) vorgesehen ist, über die der Datenspeicher (66) mit einem Daten- oder Funknetz (70) verbindbar ist und der Datenspeicher (66) derart ausgebildet ist, daß die im Datenspeicher (66) gehaltenen Informationen gesteuert von der zentralen Verarbeitungsvorrichtung (68) durch über das Daten- oder Funknetz (70) abrufbare Informationen ersetzbar sind.

3. Vorrichtung nach Anspruch 2, **dadurch gekennzeichnet,** daß die im Bereich des Datenspeichers (66), der den Speicher (4) bildet, gehaltenen Umrechnungskonstanten (C₁, C₂) ersetzbar sind.

4. Vorrichtung nach Anspruch 2 oder 3, **dadurch gekennzeichnet,** daß das Datenverarbeitungsprogramm (72) über das Daten- oder Funknetz (70) abrufbar und nach Art eines Java- oder ActiveX-Applets ausgebildet ist.

5. Vorrichtung nach einem der vorangehenden Ansprüche, **dadurch gekennzeichnet,** daß das Datenverarbeitungsprogramm (72) wenigstens ein Unterprogramm (71) umfaßt, das derart ausgebildet ist, daß es gesteuert von der zentralen Verarbeitungsvorrichtung (68) nach Art eines Filters auf zu Dateien zusammengefaßte Speicherbereiche im Datenspeicher (66) zugreift und die darin gehaltenen Informationen mit dem Format der ersten bzw. zweiten Währung vergleicht, den Inhalt von Speicherbereichen der jeweiligen Datei, die dem Format der ersten bzw. zweiten Währung entsprechen, jeweils in den Eingangspufferspeicher (6) überträgt, wobei die Auswahlsteuereinrichtung (12) entsprechend dem Format des jeweiligen Speicherbereichs geschaltet ist, und den Inhalt des Speicherbereichs durch den Inhalt des Ausgangspufferspeichers (8) ersetzt.

6. Vorrichtung nach einem der vorangehenden Ansprüche, **dadurch gekennzeichnet,** daß dem ersten Ausgabebereich (3.1) ein erstes Auswählelement (10) und dem zweiten Ausgabebereich (3.2) ein zweites Auswahlelement (11) zugeordnet ist.

7. Vorrichtung nach einem der vorangehenden Ansprüche, **dadurch gekennzeichnet,** daß das erste Auswahlelement (10) eine der ersten Währung entsprechende Kennzeichnung und das zweite Auswahlelement (11) eine der zweiten Währung entsprechende Kennzeichnung aufweist.

8. Vorrichtung nach einem der vorangehenden Ansprüche, **dadurch gekennzeichnet,** daß zum Rücksetzen des Eingangspufferspeichers (6) sowie des Ausgangsspeichers (8) bei Betätigung eines der Auswahlelemente (10, 10', 11, 11') das erste und das zweite Auswahlelement (10, 10', 11, 11') über eine ODER-Funktion (14) verknüpft jeweils mit dem Eingangspufferspeicher (6) und dem Ausgangsspeicher (8) verbunden sind.

9. Vorrichtung nach einem der vorangehenden Ansprüche, **dadurch gekennzeichnet,** daß die Auslöseeinheit Mittel (5) zur Erfassung der Betätigung der Eingabeeinheit (1) aufweist.

10. Vorrichtung nach einem der vorangehenden Ansprüche, **dadurch gekennzeichnet,** daß die erste und die zweite Ausgabeeinheit durch eine Diplay gebildet werden, in der die einzelnen Zeichenelemente zeitlich nacheinander angesteuert werden.

11. Vorrichtung nach Anspruch 6, **dadurch gekennzeichnet,** daß die Vertauschung des ersten und zweiten Anzeigebereichs durch zeitliche Vertauschung der Reihenfolge der Ansteuerung der Zeichenelemente dieser Ausgabeeinheiten erfolgt.

12. Vorrichtung nach einem der vorangehenden Ansprüche, **dadurch gekennzeichnet,** daß die Recheneinheit nach Eingabe einer jeden Ziffer jeweils eine vollständige Multiplikation der aus der bis dahin eingegeben Ziffernfolge bestehenden Zahl mit der ausgewählten Umrechnungskonstanten durchführt.

13. Vorrichtung nach einem der vorangehenden Ansprüche, **dadurch gekennzeichnet,** daß durch Eingabe eines Dezimalkommas über ein entsprechendes der Dezimalkommaneingabe zugeordnetes Betätigungselement die Anzahl der weiteren einzugebenden Ziffern auf zwei begrenzt wird.

14. Vorrichtung nach einem der vorangehenden Ansprüche, **dadurch gekennzeichnet,** daß bei Eingabe mit festem Dezimalkomma bei Eingabe einer Anzahl von Stellen die die Anzahl der wiedergebenen Stellen überschreitet, die Zahl der nach dem Komma erscheinenden Stellen durch Versetzen des Kommasymbols jeweils um eine Stelle nach rechts reduziert wird oder bei Währungen, bei denen Dezimalstellen unbedeutend sind jewils die drei letzten Ziffern durch ein Symbol für den Faktor 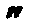 Tausend" ersetzt wird.

15. Vorrichtung nach einem der vorangehenden Ansprüche, **dadurch gekennzeichnet,** daß das Kommasymbol der Anzeige jeweils durch die Kennzeichnung der zugeordneten Währung ersetzt ist.

16. Vorrichtung nach einem der vorangehenden Ansprüche, **dadurch gekennzeichnet,** daß durch Auswahl der Eingabewähung durch ein entsprechendes Betätigungselement ein Löschen des Eingabepuffers erfolgt.

17. Vorrichtung nach einem der vorangehenden Ansprüche, **dadurch gekennzeichnet,** daß zwei Summierungsspeicher vorgesehen sind, in die, auf eine entsprechende Betätigung hin, jeweils die im Eingangspuffer bzw. dem Ausgangsspeicher enthaltenen Beträge summierend überführt werden.

18. Vorrichtung nach einem der vorangehenden Ansprüche, **dadurch gekennzeichnet,** daß die beiden Summierungsspeicher für sich gemeinsam durch ein entsprechendes Betätigungselement rücksetzbar sind.

19. Vorrichtung nach einem der vorangehenden Ansprüche, **dadurch gekennzeichnet,** daß die beiden Summierungsspeicher gemeinsam durch Betätigung der Auswahlsteuereinrichtung rücksetzbar sind.
